# EUROPÄISCHE PATENTSCHRIFT

(11) **EP 0 694 421 B1**
(45) Veröffentlichungstag und Bekanntmachung des Hinweises auf die Patenterteilung: **03.03.1999**
(21) Anmeldenummer: 95110778.8
(22) Anmeldetag: 11.07.1995
(51) Int. Cl.: B60B 27/00, G01P 3/44

(54) **Befestigungsanordnung eines Sensor-Ringes auf einem Nabenbauteil**
Fixation of a sensor-ring on a hub element
Fixation d'un dédecteur annulaire sur une partie d'un moyeu

(30) Priorität: 30.07.1994 DE 4427098
(43) Veröffentlichungstag der Anmeldung: 31.01.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Premiski, Vladimir, D-53909 Zuelpenich-Buervenich (DE); Lauscher, Friedel, D-52372 Kreuzau-drove (DE); Wehren, Wilhelm, D-50171 Kerpen-Blatzheim (DE)
(74) Vertreter: Messulam, Alec Moses

(56) Entgegenhaltungen:
- EP-A- 0 306 850
- DE-A- 3 703 395
- FR-A- 2 639 412
- GB-A- 2 281 628
- US-A- 4 171 495
- US-A- 4 783 180
- US-A- 4 795 278

## Beschreibung

Die Erfindung bezieht sich auf eine Befestigungsanordnung für einen Sensor-Ring auf einem Nabenteil gemäß den Merkmalen des Oberbegriffs von Anspruch 1.

Aus der EP-PS 0 306 850 ist eine Befestigung für einen Sensor-Ring auf einem Nabenbauteil ähnlich der im Oberbegriff des Patentanspruches 1 erläuterten Art bekannt.

Bei der bekannt Befestigung ist die elastisch eingerastete Verbindung in Drehrichtung nicht definiert festgelegt, so daß es infolge von Vibrationen an den Bauteilen zu einem allmählichen Wandern des nur elastisch eingerasteten Sensor-Ringes kommen kann, wodurch ggf. die erwünschte Signalabgabe verändert oder gestört wird.

Aus der US-PS 4 795 278 ist eine weitere Befestigung für einen Sensor-Ring auf einem Nabenteil bekannt, wobei verschiedene Querschnittsformen und verschiedene Befestigungsstellen vorgeschlagen werden, wobei auch hier wieder im wesentlichen auf eine reibschlüssige Befestigung vertraut wird.

Auch bei dieser bekannten Befestigung kann es bei ungünstigen Toleranzen und auftretenden Vibrationen zum Wandern des Sensor-Ringes kommen. ,.

Aus der gattungsgemäßen FR-A-2 639 412 ist eine Befestigungsanordnung für einen Sensorring auf einem Nabenteil bekannt, wobei am Sensorring, an dessen Innenumfang, Rastabschnitte ausgebildet sind, die in eine am Außenumfang des Nabenteiles ausgebildete ringförmige Rastnut einrasten, in dem diese Rastabschnitte deformiert werden.

Bei dieser bekannten Befestigungsanordnung ist somit zur Festlegung des Sensorringes auf dem Nabenteil eine Verformungsoperation der Rastabschnitte erforderlich, wodurch zwar eine sichere drehfeste Verbindung erzielt wird, ein nachträgliches Lösen dieser Verbindung zum Zwecke der Demontage jedoch nurmehr schwer und unter Umständen durch Zerstörung möglich ist.

Das Ziel der Erfindung ist es, eine Befestigung für einen Sensor-Ring auf einem Nabenteil derart zu verbessern, daß eine einfache Befestigung mit sicherer drehfester Mitnahme gewährleistet wird und dennoch ein bei Bedarf einfaches Demontieren möglich bleibt.

Gemäß der Erfindung wird dieses Ziel erreicht, indem eine Befestigung gemäß dem Oberbegriff des Patentanspruches 1 die im Kennzeichenteil des Patentanspruches 1 aufgezeigten Merkmale aufweist.

Dadurch, daß der Sensor-Ring mit zumindest einem sich radial erstreckenden Lappen mit einer Öffnung zur Drehfestlegung an einem Vorsprung am Nabenteil versehen ist und am Sensor-Ring zumindest drei sich axial erstreckende Rastzungen freigeschnitten sind, die mit der Ringnut am Nabenteil verrastend zusammenwirken, wird neben einer einfachen elastischen Einrastbefestigung auch eine drehsichere Mitnahme gewährleistet.

In den Ansprüchen 2 und 3 sind weitere zweckmäßige Ausführungsformen der Erfindung erläutert.

Die Erfindung wird anhand eines in den beiliegenden Zeichnungen gezeigten Ausführungsbeispieles näher erläutert. Es zeigt:
- Fig. 1: einen Teilschnitt durch ein automatisches Ge triebe mit einer Befestigung eines Sensor-Ringes gemäß der Erfindung an einem Nabenteil;
- Fig. 2 und 3: jeweils eine halbe Ansicht auf zwei unterschiedliche Ausführungsformen einer Befestigung eines Sensor-Ringes in Fig. 1;
- Fig. 4 und 5: zeigen in vergrößerten Schnitten die in Strich-Punkt-Kreisen IV bzw. V dargestellten Einzelheiten der Rastbefestigung.

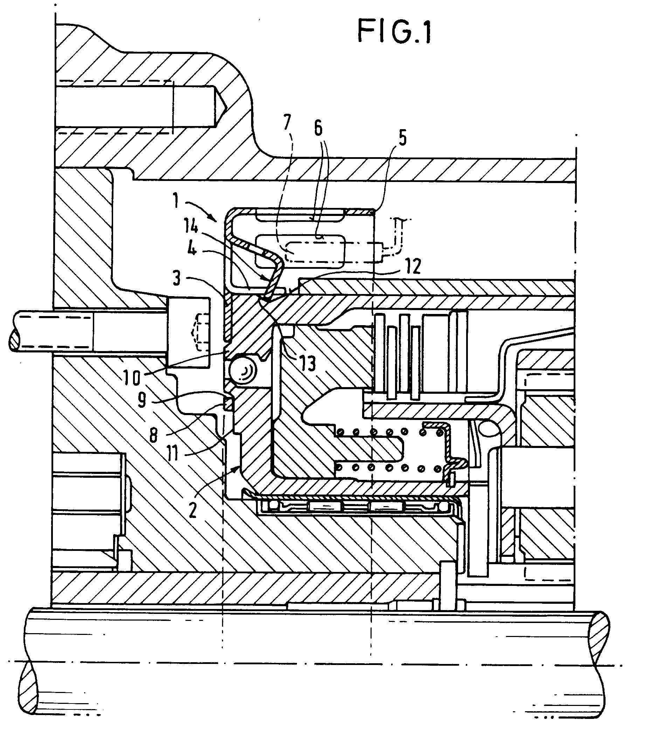

Bei der in Fig. 1 gezeigten Einbauanordnung für einen Sensor-Ring 1 auf einem Nabenteil 2 sind nur die zum Verständnis der Erfindung erforderlichen Bauteile mit Bezugszeichen versehen und beschrieben.

Im gezeigten Ausführungsbeispiel dient der Sensor-Ring 1 in einem automatischen Getriebe zum Feststellen der Drehzahl des Nabenteiles 2, das in diesem Fall eine Kupplungs-Bremstrommel-Anordnung für einen Planetenradsatz ist.

Der Sensor-Ring 1 weist im wesentlichen einen U-förmigen Querschnitt auf mit einer sich in radialer Richtung erstreckenden Basis 3 und jeweils einem sich in Axialrichtung erstreckenden inneren Ring 4 und einem äußeren Ring 5. Der innere Ring 4 übergreift einen Teil des Außenumfanges des Nabenteiles 2 während der Außenring 5 mit einer Vielzahl von Öffnungen 6 versehen ist, die von einem in der Nähe des Sensor-Ringes angeordneten Fühler 7 im Vorbeilauf erfaßt und gezählt werden können.

Die sich radial erstreckende Basis 3 ist mit zumindest einem sich radial nach innen erstreckenden Lappen 8 versehen, in dem eine Öffnung 9 vorgesehen ist, der mit einem entsprechenden Vorsprung 10 an einer Basiswand 11 des Nabenteiles 2 eine formschlüssige, drehfeste Verbindung herzustellen.

Das Nabenteil 2 ist in seinem an die Basisfläche 11 anschließenden Außenumfang 12, der vom inneren Ring 4 des Sensor-Ringes 1 übergriffen wird, mit einer im Querschnitt V-förmigen, ringförmigen Rastnut 13 versehen.

Der Sensor-Ring 1 ist an seiner Basis 3 mit an zumindest drei am Umfang verteilten ausgestellten Rastzungen 14 versehen, die einen sich axial und einen sich radial erstreckenden Feder- und Rastabschnitt 15 und 16 aufweisen und die den Sensor-Ring 1 nach dem Aufschieben auf den Außenumfang 12 des Nabenteiles 2 gegen ein ungewolltes axiales Abziehen durch Einrasten in die ringförmige Rastnut 13 sichern.

Durch Ansetzen eines Spreizwerkzeuges an den Öffnungen 17 der sich axial erstreckenden Abschnitten 15 kann der Sensor-Ring 1 vom Nabenteil 2 gelöst werden.

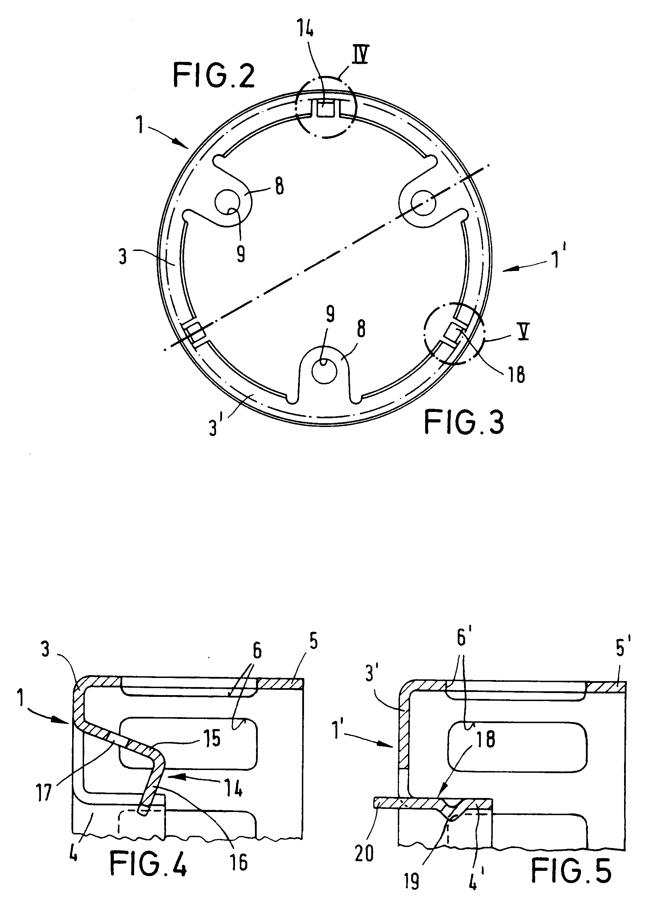

Bei der im unteren Teil der Fig. 3 gezeigten Ausführungsform ist ein weiterer Sensor-Ring 1' gezeigt, der wieder einen im wesentlichen U-förmigen Querschnitt mit einem sich in axialer Richtung erstreckenden inneren Ring 4' und einem äußeren Ring 5' aufweist. Ebenso sind wieder eine Vielzahl von Öffnungen 6' im äußeren Ring 5' vorgesehen.

In dieser Ausführungsform sind am Übergang zwischen dem Basisteil 3' und dem inneren Ring 4' an zumindest drei am Umfang verteilten Stellen ausgestellte Rastzungen 18 vorgesehen, die im wesentlichen einen Rastnocken 19 und eine Handhabe 20 aufweisen. Auch hier wird der Sensor-Ring 1' durch einfaches axiales Aufschieben auf das Nabenteil 2 und Einrasten der Rastnocken 19 in die ringförmige Rastnut 13 befestigt. Ähnlich wie bei der ersten Ausführungsform wird eine drehfeste Verbindung über eine am Basisteil 3' angeordnete Lasche 8 mit einer Rastöffnung 9 sichergestellt.

## Patentansprüche

1. Befestigungsanordnung für einen Sensor-Ring (1) auf einem Nabenteil (2), wobei am Sensor-Ring (1) an dessen Innenumfang Rastabschnitte (16 bzw. 19) ausgebildet sind, die in eine am Außenumfang des Nabenteiles (2) ausgebildete ringförmige Rastnut (13) einrasten, **dadurch gekennzeichnet**,
- daß der Sensor-Ring (1) einen U-förmigen Querschnitt aufweist und mit zumindest einem sich von seiner Basis (3) radial erstreckenden Lappen (8) versehen ist, der eine Öffnung (9) aufweist, die in einen am Basisteil (11) des Nabenteiles (2) ausgebildeten Vorsprung (10) eingreift, um den SensorRing (1) drehfest festzulegen, und
- daß an der Basis (3) des Sensor-Ringes (1) zumindest an drei am Umfang verteilten Stellen sich im wesentlichen axial erstreckende, freigeschnittene Rastzungen (14 bzw. 18) vorgesehen sind, die die Rastabschnitte (16 bzw. 19) aufweisen, welche mit der Rastnut (13) verrastend zusammenwirken.

2. Befestigungsanordnung nach Anspruch 1, **dadurch gekennzeichnet**, daß jede Rastzunge (14) an ihrem Ende eine den Rastabschnitt bildende Rastkante (16) und im Federabschnitt (15) eine Öffnung (17) zum Einsetzen eines Lösewerkzeuges aufweist, mittels dem ein Ausheben der Rastabschnitte (16) erleichtert wird.

3. Befestigungsanordnung nach Anspruch 1, **dadurch gekennzeichnet**, daß jede Rastzunge (18) eine den Rastabschnitt bildende Rastnocke (19) und eine sich axial erstreckende Handhabe (20) aufweist, mittels der ein Ausheben der Rastnocken (19) aus der Rastnut (13) erleichtert wird.

## Claims

1. An arrangement for fastening a sensor ring (1) on a hub member (2), wherein the sensor ring (1) has locking sections (16 and 19 respectively) formed on its inner circumference which engage in an annular locking groove (13) formed on the outer circumference of the hub member (3),
characterized in that
- the sensor ring (1) has a U-shaped cross-section and is provided with at least one wing (8) extending radially from its base (3) with an opening (9) for engaging on a projection (10) on the base part (11) of the hub member (2) in order to locate the sensor ring (1) non-rotatably, and
- on the base (3) of the sensor ring (1), at least at three positions distributed around the circumference, substantially axially extending, cut-free locking tabs (14 and 18 respectively) are provided which cooperate lockingly with the locking groove (13).

2. A fastening arrangement according to claim 1,
characterized in that
- each locking tab (14) has at its end a locking edge (16) forming the locking section and in its spring section (15) an opening (17) for insertion of a releasing tool, by means of which lifting the locking sections (16) out is facilitated.

3. A fastening arrangement according to claim 1,
characterized in that
- each locking tab (18) is provided with a locking cam (19) forming the locking section and with an axially extending handle (20) by means of which lifting of the locking cam (19) out of the annular locking groove (13) is facilitated.

## Revendications

1. Agencement de fixation d'une bague de capteur (1) sur une pièce de moyeu (2), des parties d'enclenchement (16 ou 19) étant configurées sur la périphérie intérieure de la bague de capteur (1), qui s'enclenchent dans une rainure d'enclenchement annulaire (13) configurée sur la périphérie extérieure de la pièce de moyeu (2), **caractérisé**
- en ce que la bague de capteur (1) présente une section en forme de U et est pourvue d'au moins une patte (8), qui s'étend radialement à partir de sa base (3) et qui présente une ouverture (9), qui s'engage sur une saillie (10) configurée sur la partie de base (11) de la pièce de moyeu (2) afin de lier en rotation la bague de capteur (1),
- et en ce qu'il est prévu sur la base (3) de la bague de capteur (1), en au moins trois endroits répartis sur la périphérie, des languettes d'enclenchement (14 ou 18) en découpe libre, s'étendant essentiellement axialement, qui présentent les parties d'enclenchement (16 ou 19) qui coopèrent avec la rainure d'enclenchement (13) pour effectuer l'assemblage par enclenchement.

2. Agencement de fixation selon la revendication 1, **caractérisé** en ce que chaque languette d'enclenchement (14) présente à son extrémité une arête d'enclenchement (16) constituant la partie d'enclenchement et, dans la partie élastique (15), une ouverture (17) pour l'insertion d'un outil de libération qui facilite le dégagement des parties d'enclenchement (16).

3. Agencement de fixation selon la revendication 1, **caractérisé** en ce que chaque languette d'enclenchement (18) possède un ergot d'enclenchement (19) constituant la partie d'enclenchement et une manette (20) s'étendant axialement, qui facilite le dégagement de l'ergot d'enclenchement (19) hors de la rainure d'enclenchement (13).
